# EUROPEAN PATENT SPECIFICATION

(11) **EP 0 868 002 B1**
(45) Date of publication and mention of the grant of the patent: **10.12.2008**
(21) Application number: 98103916.7
(22) Date of filing: 05.03.1998
(51) Int. Cl.: H02J 3/36

(54) **A plant for transmitting electric power**
Anlage zur elektrischen Kraftübertragung
Installation de transmission d'énergie électrique

(30) Priority: 24.03.1997 SE 9701066
(43) Date of publication of application: 30.09.1998
(73) Proprietor: ABB AB, 721 83 Västerås (SE)
(72) Inventor: Weimers, Lars, 771 34 Ludvika (SE)
(74) Representative: Olsson, Jan

(56) References cited:
- US-A- 4 153 752
- US-A- 5 010 467
- US-A- 5 535 113
- Anders Lindberg, PWM and control of two and three level high power voltage source converters, pag. 1-3, Royal Institute of Technology, Stockholm 1995, see pages 1-3, XP002900131

## Description

### FIELD OF THE INVENTION AND PRIOR ART

The present invention relates to a plant for transmitting electric power according to the preamble of appended claim 1..

In such plants according to the prior art uninsulated overhead lines have primarily been used so as to realise the direct voltage network interconnecting said stations, which may be located at very large distances - well possible in the order of 1000 km. However, such overhead lines have a comparatively great disturbing influence upon the country and the living beings where they are arranged. The alternative has been to use cables having an inner conductor surrounded by a thick insulating layer formed by a paper impregnated by oil, but such cables are that costly that they do not constitute any realistic alternative to overhead lines. Experiments have been carried out with use of cables having a conductor and an insulating layer on polymer base surrounding it for transmitting High Voltage Direct Current (HVDC), but these experiments have indicated great problems to use this type of cables for transmitting High Voltage Direct Current (HVDC), since space charges are created in the insulating layer and they cause breakthroughs and by that breakdowns in the cables in the changes of polarity to which the conductor of the cable is subjected when the feeding direction of the power transmitted between the direct voltage network and an alternating voltage network is changed. A result of these problems is that overhead lines have been used for transmitting High Voltage Direct Current (HVDC) over land and cables having tailor made insulating sheets have been used as sea cables for transmitting between land areas separated by water.

### SUMMARY OF THE INVENTION

The object of the present invention is to provide a plant of the type defined in the introduction, through which the problems mentioned above are reduced to a large extent.

This object is according to the invention obtained by providing a plant according to appended claim 1.

Exactly this combination have very positive consequences. By using a voltage-stiff VSC-converter for converting direct voltage into alternating voltage and conversely in the stations of the plant, which utilises power semiconductor devices of turn-off type, no change of polarity of the conductor of the direct voltage network cable is ever carried out, so that the problems mentioned above of breakthroughs and breakdowns in the cable as a consequence of the space charge effect in the use of cables having a conductor surrounded by an insulating layer of polymer base disappear. Thus, the present inventors have realised that, in spite of the signals in the opposite direction given by the experiments discussed above, it is possible to use this type of cable thanks to an almost disappearance of the space charge problem in said combination. This type of cables has previously been used for alternating voltage transmittance, but they have then had to be provided with a considerably thicker insulating layer than in the case of direct voltage transmittance, so that the line cost may be lowered considerably for transmittance of High Voltage Direct Current through this type of cables with respect to transmittance of alternating voltage by such cables.

Cables of this type having a conductor surrounded by an insulating layer of polymer base may be produced to a far lower cost than the cables mentioned above provided so far for transmitting High Voltage Direct Current, which have a conductor surrounded by an insulating layer based on paper impregnated by oil. This means that such cables become an alternative to overhead lines being attractive from the cost point of view, so that there is now a possibility to get rid of all the inconveniences of such overhead lines without any substantial negative consequences with respect to costs.

It is pointed out that the invention is based upon the understanding that it should for transmitting High Voltage Direct Current be possible to use the cables previously rejected for this application having a conductor surrounded by an insulating layer of polymer base for transmitting High Voltage Direct Current by combining them with voltage-stiff VSC-converters in the stations for transmitting power between the direct voltage network and alternating voltage networks connected thereto at the stations. The space charge problems mentioned above are namely through exactly this combination reduced in a very high degree and this is the essence of the invention, but it is underlined that no insulating layer of polymer base what so ever of any standard material should be used, but materials developed particularly for this application should be used in a plant of this type for obtaining optimum characteristics of the cable, such as withstand capability, insulating capability and for avoiding breakthroughs.

It is known through US-A-4 153 752 to use a cable with an insulating layer of polymer base surrounding a conductor for transmitting High Voltage Direct Current. Furthermore, the document: "PWM and control of two and three level high power voltage source converters" of Anders Lindberg, Royal Institute of Technology, Stockholm, 1995 shows that it is already known to use VSC-converters in stations in a plant for transmitting power between these stations through High Voltage Direct Current. However, nothing is mentioned in US-A-4 153 752 about problems with space charges when changing the feeding direction in the cable, and no thoughts are obviously spent on this problem or such a change of feeding direction is not at all at stake there. It was for sure not before possible to use cables with an insulating layer of polymer base for transmitting power in the form of High Voltage Direct Current when there was a desire to change the feeding direction, and it should be too much to expect a person with ordinary skill in the art to understand that when now plants having VSC-converters in the stations have become known it should be possible to use such a cable in applications in which there is a desire to change said feeding direction.

"MPS cables could be MIND blowing for 1200 MW links", Modern Power Systems, Wilmington Publishing, UK, July 1996 discusses the problems of using a cable of this type for HVDC as a consequence of space charge phenomena, and it is discussed how such a cable should be designed for enabling use thereof for so high voltages as possible without causing breakthroughs and by that breakdowns in the cables. However, nothing is said about any possibility to avoid problems with said space charges by not carrying out any polarity changes.

"High Power Electronics HVDC and SVC", pages 11-1 to 11-18, Ake Ekström, SE, June 1990 only reveals that VSC-converters may be used for HVDC, which also was known before. Nothing is said about using a cable with an insulating layer of polymer base surrounding the conductor for realizing the direct voltage network and then of course also nothing about using a VSC-converter adapted to control change of feeding direction in said network by changing the direction of the current through such a cable without polarity change of the conductor thereof.

According to a preferred embodiment of the invention said cable is an extruded cable. Such a cable may be produced to such a cost and such a quality that it would be very advantageous to use in combination with voltage-stiff VSC-converters in stations in a plant for transmitting High Voltage Direct Current.

The invention relates also to a use of a cable having an inner conductor for electricity and an insulating layer of polymer base surrounding the conductor according to appended claim 6. The advantages of such a new use according to the invention appear very clearly from the above discussion of the plant according to the invention.

Further advantages as well as advantageous features of the invention appear from the following description and the other dependent claims.

### BRIEF DESCRIPTION OF THE DRAWINGS

With reference to the appended drawings, below follows a description of preferred embodiments of the invention cited as examples.

In the drawings:
Fig 1 is a very schematic block diagram illustrating a plant according to a first preferred embodiment of the invention,
Fig 2 is a view corresponding to Fig 1 of a plant according to a second preferred embodiment of the invention, and
Fig 3 is a simplified cross-section through a cable used between stations of the plants according to Fig 1 and 2.

### DETAILED DESCRIPTION OF PREFERRED EMBODIMENTS OF THE INVENTION

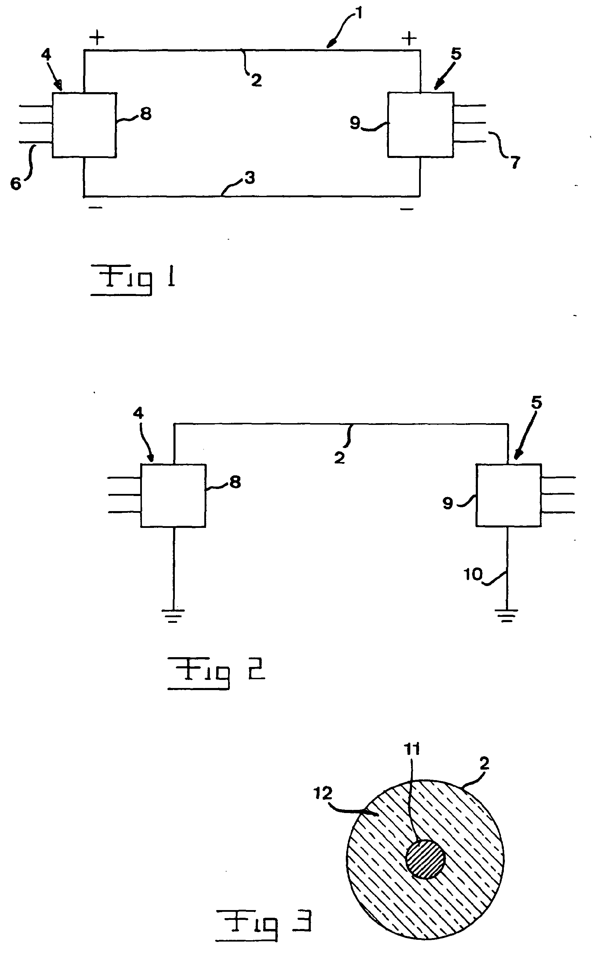

A plant for transmitting electric power according to a preferred embodiment of the invention is very schematically illustrated in Fig 1, said plant comprising a direct voltage network 1 for High Voltage Direct Current (HVDC = High Voltage Direct Current) having two cables 2, 3 with an inner conductor surrounded by an insulating layer of polymer base, for example extruded cables, for interconnecting two stations 4, 5, in which these stations are adapted for transmitting electric power between the direct voltage network 1 and an alternating voltage network 6, 7 connected to the respective station. It is here indicated that the alternating voltage network has three phases, but another number of phases is also possible. One 2 of the cables is intended to be on positive potential of half the direct voltage of the direct voltage network, while the other cable is on negative potential of half the direct voltage. The direct voltage may in operation typically be between 50 and 500 kV.

The stations are here indicated only through a voltage-stiff VSC-converter 8, 9 (Voltage Source Converter) each. It is of course also possible that one station comprises several such converters. The respective VSC-converter comprises in a conventional way so called valves, which consist of branches of breakers of turn-on and turn-off type connected in series, preferably in the form of IGBTs, and diodes connected in anti-parallel therewith. A great number of IGBTs may for example be connected in series in one single valve so as to be turned on and turned off simultaneously so as to function as one single breaker, wherethrough the voltage across the valve is distributed among the different breakers connected in series. The control of the breakers is in a conventional way carried out by pulse with modulation (PWM).

The stations 4, 5 may very well be located at so long mutual distances as 1000 km.

By using voltage-stiff converters in the HVDC-plant it is only necessary to change the direction of the current through the valves when the direction of the power feed between the direct voltage network and the alternating voltage network is to be changed, so that there will be no problem with any breakthrough and breakdown in the cable as a consequence of space charges in the isolation in the polarity change of the cable previously required. This means that a cable having an insulating layer of polymer base surrounding the conductor may be used so as to connect the two stations 4, 5. Such a cable will be much less costly than the cables possible so far for transmitting High Voltage Direct Current (HVDC), which primarily are very expensive as a consequence of complicated production processes. Accordingly, a cable having a price in the region of that of overhead lines may be used, and it will by that in most cases be preferred with respect to overhead lines thanks to the fact that it is considerably easier to arrange such cables without any problems for the environment than to arrange overhead lines.

Another possible preferred embodiment of a plant according to the invention is illustrated in Fig 2, which differs from that shown in Fig 1 by the fact that one single cable 2 having a conductor surrounded by an insulating layer of polymer base connects the two stations 4, 5, which are provided with an earth return circuit 10. Thus, the cable 2 is here on direct voltage potential.

Finally, Fig 3 illustrates a cable 2 used in a plant according to the invention, which has an inner conductor 11 for conducting High Voltage Direct Current (HVDC) and an insulating layer 12 of polymer base surrounding it, which may be produced by extrusion.

The invention is of course not in any way restricted to the preferred embodiments described above, but modifications thereof may be carried out within the scope of the invention as defined in the appended claims..

As an example of such a modification it may be mentioned that the number of stations of such a plant could be higher than two.

## Claims

1. A plant for transmitting electric power between a direct voltage network (1) for High Voltage Direct Current (HVDC) included therein and at least two alternating voltage networks (6, 7) connected thereto through a station (4, 5) each, said stations being adapted to perform transmitting of electric power between the direct voltage network and the respective alternating voltage network, said plant being of the type with possibility to feed electric power through the direct voltage network in both directions between the stations,
**characterized by** the combination of on one hand the arrangement of at least one voltage-stiff converter, i.e. a VSC-converter (8, 9), in each station for converting direct voltage to alternating voltage and conversely, and on the other the arrangement of at least one cable (2, 3) with an insulating layer (12) of polymer base surrounding the conductor (11) thereof for forming the direct voltage network interconnecting the stations, in which said at least one VSC- converter is adapted to control changes of said feeding direction of electric power through the direct voltage network without polarity change of said conductor by changing the direction of the current through said cable.

2. A plant according to claim 1,
**characterized in that** said cable (2, 3) is an extruded cable.

3. A plant according to claim 1 or 2,
**characterized in that** it comprises two said cables (2, 3) interconnecting the two stations (4, 5), one (2) of which forms the positive pole of the direct voltage network and the other (3) the negative pole thereof.

4. A plant according to claim 1 or 2,
**characterized in that** it has only one said cable (2) for interconnecting the two stations (4, 5), and that the respective station is provided with an earth return circuit (10).

5. A plant according to any of claims 1-4,
**characterized in that** the direct voltage network (1) is adapted to have an operation voltage of 50-500 kV.

6. A use of a cable (2, 3) having an inner conductor (11) for electricity and an insulating layer (12) of polymer base surrounding the conductor for forming the direct voltage network interconnecting the stations (4, 5) in transmitting of electric power through High Voltage Direct Current (HVDC), in which each station has at least one voltage-stiff converter, i.e. a VSC-converter (8, 9), for converting direct voltage to alternating voltage and conversely, in which the stations are included in a plant of the type with possibility to feed electric power through the direct voltage network in both directions between the stations, and which said at least one VSC- converter is adapted to control changes of said feeding direction of electric power through the direct voltage network without polarity change of said conductor by changing the direction of the current through said cable.

## Patentansprüche

1. Anlage zum Übertragen von elektrischer Energie zwischen einem darin enthaltenen Gleichspannungsnetz
(1) für Hochspannungsgleichstrom (HVDC) und wenigstens zwei Wechselspannungsnetzen (6, 7), welche mit diesem jeweils durch eine Station (4, 5) verbunden sind, wobei die Stationen angepasst sind, das Übertragen von elektrischer Energie zwischen dem Gleichspannungsnetz und dem jeweiligen Wechselspannungsnetz durchzuführen, wobei die Anlage von der Art ist, die das Zuführen von elektrischer Energie durch das Gleichspannungsnetz in beide Richtungen zwischen den Stationen ermöglicht,
**gekennzeichnet durch** die Kombination aus, einerseits, der Anordnung wenigstens eines spannungsstabilen Umrichters, d.h. eines VSC-Umrichters (8, 9), in jeder Station zum Umwandeln von Gleichspannung in Wechselspannung und umgekehrt, und, andererseits, der Anordnung wenigstens eines Kabels (2, 3) mit einer isolierenden Schicht (12) mit Polymerbasis, welche den Leiter (11) desselben umgibt, zum Bilden des Gleichspannungsnetzes, welches die Stationen miteinander verbindet, wobei der wenigstens eine VSC-Umrichter angepasst ist, Änderungen der Zufuhrrichtung elektrischer Energie **durch** das Gleichspannungsnetz ohne Polaritätsänderung des Leiters **durch** Ändern der Richtung des Stroms **durch** das Kabel zu steuern.

2. Anlage nach Anspruch 1, **dadurch gekennzeichnet, dass** das Kabel (2, 3) ein extrudiertes Kabel ist.

3. Anlage nach Anspruch 1 oder 2, **dadurch gekennzeichnet, dass** sie zwei Kabel (2, 3) umfasst, welche die zwei Stationen (4, 5) miteinander verbinden, wobei eines (2) den positiven Pol des Gleichspannungsnetzes bildet und das andere (3) den negativen Pol desselben.

4. Anlage nach Anspruch 1 oder 2, **dadurch gekennzeichnet, dass** sie nur ein Kabel (2) aufweist, um die zwei Stationen (4, 5) miteinander zu verbinden, und dass die jeweilige Station mit einer Erdrückleitung (10) versehen ist.

5. Anlage nach einem der Ansprüche 1 bis 4, **dadurch gekennzeichnet, dass** das Gleichspannungsnetz (1) angepasst ist, eine Betriebsspannung von 50 bis 500 kV aufzuweisen.

6. Verwendung eines Kabels (2, 3), welches einen inneren Leiter (11) für Elektrizität und eine isolierende Schicht (12) mit Polymerbasis aufweist, welche den Leiter umgibt, um das Gleichspannungsnetz zu bilden, welches die Stationen (4, 5) miteinander verbindet, beim Übertragen von elektrischer Energie durch Hochspannungsgleichstrom (HVDC), wobei jede Station wenigstens einen spannungsstabilen Umrichter, d.h. einen VSC-Umrichter (8, 9), zum Umwandeln von Gleichspannung in Wechselspannung und umgekehrt aufweist, wobei die Stationen in einer Anlage derjenigen Art enthalten sind, die das Zuführen von elektrischer Energie durch das Gleichspannungsnetz in beide Richtungen zwischen den Stationen ermöglicht und wobei der wenigstens eine VSC-Umrichter angepasst ist, Änderungen der Zufuhrrichtung elektrischer Energie durch das Gleichspannungsnetz ohne Polaritätsänderung des Leiters durch Ändern der Richtung des Stroms durch das Kabel zu steuern.

## Revendications

1. Installation pour transmettre le courant électrique entre un réseau en courant continu (1) pour du courant continu à haute tension (HVDC) inclus dedans et au moins deux réseaux en courant alternatif (6, 7) connectés à celui-ci chacun par une station (4, 5), les dites stations étant adaptées à réaliser la transmission de courant électrique entre le réseau en courant continu et le réseau en courant alternatif respectif, la dite installation étant du type ayant une possibilité de fournir du courant électrique par le réseau en courant continu dans les deux directions entre les stations,
**caractérisée par** la combinaison d'une part de l'arrangement d'au moins un convertisseur rigide en voltage c'est-à-dire un convertisseur VSC (8, 9) dans chaque station pour convertir le courant continu en courant alternatif et inversement, et d'autre part la disposition d'au moins un câble (2, 3) avec une couche d'isolation (12) de base de polymère entourant le conducteur (11) pour former le réseau en courant continu interconnectant les stations, dans lequel le dit au moins un convertisseur VSC est adapté à contrôler les changements de la dite direction d'alimentation du courant électrique par le réseau en courant continu sans changement de polarité du dit conducteur en changeant la direction du courant dans le dit câble.

2. Installation selon la revendication 1, **caractérisée en ce que** le dit câble (2, 3) est un câble extrudé.

3. Installation selon la revendication 1 ou 2, **caractérisée en ce qu'**elle comprend deux dits câbles (2, 3) interconnectant les deux stations (4, 5), dont l'un (2) forme le pôle positif du réseau de courant continu et l'autre (3) son pôle négatif.

4. Installation selon la revendication 1 ou 2, **caractérisée en ce qu'**elle a seulement un dit câble (2) pour interconnecter les deux stations (4, 5) et **en ce que** la station respective est pourvue d'un circuit de retour à la terre (10).

5. Installation selon l'une quelconque des revendications 1 à 4, **caractérisée en ce que** le réseau de courant continu (1) est adapté à avoir une tension de fonctionnement de 50-500 kV.

6. Utilisation d'un câble (2, 3) ayant un conducteur interne (11) pour l'électricité et une couche d'isolation (12) de base de polymère entourant le conducteur pour former le réseau en courant continu interconnectant les stations (4, 5) en transmettant le courant électrique par courant continu à haute tension (HVDC), dans lequel chaque station a au moins un convertisseur rigide en voltage, c'est-à-dire un convertisseur VSC (8, 9), pour convertir le courant continu en courant alternatif et inversement, dans lequel les stations sont incluses dans une installation du type ayant une possibilité de fournir du courant électrique par le réseau en courant continu dans les deux directions entre les stations, et dans lequel le dit au moins un convertisseur VSC est adapté à contrôler les changements de la dite direction d'alimentation du courant électrique par le réseau de courant continu sans changement de polarité du dit conducteur en changeant la direction du courant dans le dit câble.
